# EUROPEAN PATENT APPLICATION

(11) **EP 4 579 195 A1**
(43) Date of publication of application: **02.07.2025**
(21) Application number: 23020571.8
(22) Date of filing: 28.12.2023
(51) Int. Cl.: G01D 4/00, H04Q 9/00, G01F 15/063, G01D 9/42, G01F 25/10, G01M 3/04

(54) **DEVICE FOR OPTICAL READING OF GAS METER DIGITS AND DETECTION OF LEAKS OF THE GAS INSTALLATION AT THE PLACE OF INSTALLATION**

(71) Applicant: Wares Sp. z o.o., 81-451 Gdynia (PL)
(72) Inventor: Benert, Dariusz, 81-589 Gdynia (PL); Zabrocki, Piotr, 84-215 Gowino (PL); Smolinski, Rafal, 81-577 Gdynia (PL)

(57) **Abstract**

A device for optical reading of gas meter digits and detecting leaks in the gas installation at the place of installation, comprising: a housing consisting of a housing base 1 and a housing cover 2, a battery 3, a PCB board 4, characterised in that it has a housing base 1 of rectangular cross-section containing a battery 3 and a housing cover 2 with a PCB board 4, which cover 2 with a PCB board 4 constitutes one wall of the housing, and the housing base 1 has openings 5 in each corner and a handle 6, which is mounted in place 7 in the lower part of the housing base 1, which handle 6 comprises an arm 8 with a cross-section of the letter s and the housing base 1 has an empty space inside and has the shape of an approximately cuboid, and the PCB board 4 contains a camera 9 connected to the PCB board by a connector, LED lighting 10 connected to the PCB board permanently by soldering, a communication module 11 connected to the PCB board permanently by soldering, the magnetic pulse sensor 12 permanently connected to the PCB board by soldering, and the processor 13 permanently connected to the PCB board by soldering and the gas sensor 14.

## Description

The subject of the invention is a device for optical reading of gas meter digits and detection of leaks of the gas installation at the place of installation.

A smart gas meter CN206430777U is known, which includes a gas meter body, a housing, and a data processing device. The housing consists of an epithelium body and a lower housing, and an electromagnet held in the cavity of the ultrasonic vibration system generates a recess in the last housing. During transmission of a circular telegram, the electromagnet is activated, which activates a second ultrasonic vibration system in the lower housing, and during a break in work, it releases the electromagnet and activates a second ultrasonic vibration system in the lower housing.

The device also includes a data processing device used to store memory cells containing initial information and a virtual SIM card. The latter enables tracking of the acquired server via a virtual SIM card. The connector between the memory cells reaches the mobile communication unit of the mobile communication network and is used to obtain information about the server distribution from the control unit of the virtual SIM card.

The electrical connection of the control unit includes a lighting module, an image collection module, a leak protection gas module, a valve control module and an anti-unscrewing module. The utility model has at least several advantages, such as simple design, ease of reading, low artificial labour force and ease of transport. It is worth noting, however, that this solution does not offer the possibility of monitoring consumption data generated in real time.

A gas meter reading system is known, described in JPH0833064A, which consists of a radio gas meter reader acting as the master device. Additionally, the system includes a radio device on the meter side, placed in each microcomputer gas meter as a slave device corresponding to the radio gas meter reader. The system also includes a radio gas leak alarm provided for each microcomputer gas meter.

A process of acquiring reading data and control data of the gas meter takes place between the radio gas meter reader and the radio device on the side of each meter. Additionally, control data of the gas leak alarm is acquired from the radio. The input of set positions to the gas meter and the processing of input data changes in settings are carried out by radio. On the other hand, the radio gas meter reader is able to check via radio communication whether the gas meter shut-off valve is open or closed.

However, the system does not allow monitoring of daily gas consumption using a mobile application. A photoelectric gas meter controller with direct reading based on GPRS communication technology is known, described in CN206224784U. This device includes a microcontroller, a GPRS wireless communication module, a data storage module, a valve control module, a liquid crystal display module, a keying circuit, a photoelectric direct reading module, and an energy management module.

The wireless GPRS communication module uses an SMD SIM card, and the photoelectric direct reading module operates in the direct reading mode of the photoelectric transmission type, which reads the digits from the gas table. The utility model provides a photoelectric direct reading gas meter controller based on GPRS communication technology, adopting the technical scheme of the SMD SIM card and eliminating the communication errors of the equipment. This effectively avoids the problems related to the technical aging of plug-in SIM cassettes, such as contact oxidation.

The utility model presents a photoelectric direct reading module of the transmission type, which combines the photoelectric coding algorithm, characterized by accurate reading, low consumption and low wear rate. Compared to the original gas table, the introduced amendments bring improvements in measurement and increase the conditions of reading accuracy. The solution does not have mechanical sensors in the form of contactors.

Currently, existing gas meter reading systems are based on reading magnetic pulses generated by the gas meter dial. Existing solutions focus only on reading magnetic pulses, which may be interfered with by various factors. As a result of these disturbances, a discrepancy appears between the gas meter dial and the reading of the pulse reader, which leads to the accumulation of possible errors.

The aim of this invention is to provide an accurate and non-invasive reading of the gas meter digits and to detect leaks in the gas installation. This solution aims to achieve several effects.
- Optimized gas consumption and increased energy efficiency: Thanks to precise, absolute reading of gas meter digits, users can track and control their gas consumption, contributing to more efficient use of resources and cost reduction.
- Increased safety: Detecting leaks at the gas installation site prevents potentially dangerous gas leaks, which is crucial for ensuring user safety and protecting the environment.
- Improved reading process: A device that allows optical reading of gas meter digits eliminates the need for gas utility employees to read them in person, saving time and costs for the gas supplier and users.
- Remote monitoring: A device equipped with a remote monitoring function enables gas suppliers to have real-time access to information on the status of the gas installation, enabling a quick response to potential problems and improving customer service.
- Reduced maintenance costs: Detecting leaks in gas installations helps prevent costly repairs and energy losses associated with gas leaks.
- Unambiguous indications: Optical reading eliminates the uncertainties associated with impulse reading, guaranteeing unambiguous values for both the consumer and the gas supplier.

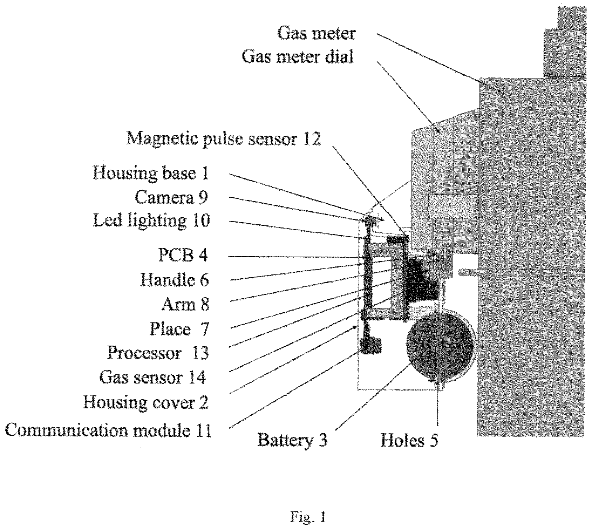

All these benefits contribute to improving both the energy efficiency and the safety of gas installations, constituting a significant step towards more sustainable and safe use of gas. Measuring gas consumption with the function of monitoring safety while using modern communication technologies translates into benefits for users, gas suppliers and environmental protection. Thanks to the invention, it is possible to achieve greater efficiency and safety in the use of gas energy. The essence of the invention is a device for optical reading of gas meter digits and detecting leaks in the gas installation at the place of installation, comprising a housing consisting of a housing base and a housing cover, a battery, a PCB board, characterized in that it has a housing base with a rectangular cross-section containing a battery and a housing cover with a PCB board, which cover with the PCB board constitutes one wall of the housing, and the housing base has holes in each corner and a handle that is mounted in a place in the lower part of the housing base, which handle comprises an arm with a cross-section in the shape of the letter s and the base the housing has an empty space inside and has the shape of an approximately cuboid, and the PCB board contains a camera connected to the PCB board by a connector, LED lighting connected to the PCB board permanently by soldering, a communication module connected to the PCB board permanently by soldering, a magnetic pulse sensor connected to the PCB board permanently by soldering, and a processor connected to the PCB board permanently by soldering and a gas sensor. The invention is illustrated in the drawing in fig. 1, which shows the device in a general view.

### Example I.

### Example of implementation with a sensor

A device for optical reading of gas meter digits and detecting leaks in the gas installation at the place of installation consists of a set of elements responsible for:
for optical reading of gas meter dial digits, creating communication using a telecommunications network between the device and the place of data collection and for reading gas concentration at the place of installation of the gas meter.

The system consists of:
- a PCB board containing electronic components
- a battery/element powering the system
- a housing

The following electronic components are located on the PCB board:
- a camera connected to the PCB board by means of a connector
- an LED connected to the PCB board by means of a soldered connection
- a communication module connected to the PCB board by means of a soldered connection
- a magnetic pulse sensor connected to the PCB board by means of a soldered connection.
- a methane detection sensor connected to the PCB board by means of a soldered connection.
- a processor connected to the PCB board by means of a soldered connection. The housing consists of three elements:
- a base containing a mounting space for the battery and a structure defining the distance of the camera from the gas meter dial/counter. The base has holes enabling connection to the cover using four screws.
- a cover that has a place for mounting a PCB associated with the camera, LEDs, gas detection sensor, magnetic pulse detection sensor and communication module.
- a holder designed to attach the reader to the gas meter counter. The holder has a specially profiled arm designed to introduce security using a rivet with a seal. The holder is mounted in a hole located in the lower part of the counter using hooks located on its upper edges.

### How it works

The camera, together with the lighting system, takes a picture of the digits on the gas meter dial. Then, using the software located in the device, the process of recognizing the digits that are in the picture is carried out. Then the processor prepares the picture for sending. The next step is to send data using a teleinformatic network to a database located on the server. The processor receives data from the gas detection sensor at specific time intervals. This data, depending on the values achieved, is sent using a communication module, which connects to the telecommunications network.

The invention is designed to work with gas meters installed at the point of its use. This installation is carried out on the network supplying gas to the recipient.

The reader performs reading using a camera and it is read locally on the dial of the gas meter and converted into a numerical record and is sent in the form of a photo - a bitmap.

Communication with the reader is carried out using a telecommunications network.

### Example II.

Example of implementation without a sensor a device for optical reading of gas meter digits consists of a set of elements responsible respectively for: optical reading of gas meter dial digits, creating LPWA communication between the device and the data collection point.

The system consists of:
- PCB board containing electronic elements
- battery/power supply element for the system
- housing

The following electronic elements are located on the PCB board:
- camera, which is connected to the PCB board by means of a connector
- LED, which is connected to the PCB board by means of a soldered connection
- communication module, which is connected to the PCB board by means of a soldered connection
- magnetic pulse sensor, which is connected to the PCB board by means of a soldered connection.
- processor, which is connected to the PCB board by means of a soldered connection.

The housing consists of three elements:
- base containing mounting space for the battery and a structure determining the distance of the camera from the gas meter dial/counter. The base has holes enabling connection to the cover using four screws
- a cover that has a place for mounting a PCB board connected to the camera, LEDs, a magnetic pulse detection sensor and a communication module.
- a holder designed to attach the reader to the gas meter counter. The holder has a specially profiled arm designed to introduce security using a rivet and a seal. The holder is mounted in a hole located in the lower part of the counter using the hooks located on its upper edges.

### How it works

The camera, together with the lighting system, takes a picture of the digits on the gas meter dial. Then, using the software located in the device, the process of recognizing the digits that are in the picture is carried out. Then the processor prepares the picture for sending. The next step is to send the data using the teleinformatic network to the database located on the server.

The invention is designed to work with gas meters installed at the point of their use. This installation is carried out on the network supplying gas to the recipient.

The reader performs the reading using a camera and it is read locally on the dial of the gas meter and converted into a numerical record and is sent in the form of a photo - a bitmap.

Communication with the reader is carried out using a telecommunications network.

## Claims

1. Device for optical reading of gas meter digits and detecting leaks of the gas installation at the place of installation, comprising: a housing consisting of a housing base 1 and a housing cover 2, a battery 3, a PCB board 4, **characterised in that** it has a housing base 1 with a rectangular cross-section containing a battery 3 and a housing cover 2 with a PCB board 4, wherein the cover 2 with the PCB board 4 constitutes one wall of the housing, and the housing base 1 has holes 5 in each corner and a handle 6, which is mounted in place 7 in the lower part of the housing base 1, wherein the handle 6 contains an arm 8 with a cross-section of the letter s and the housing base 1 has an empty space inside and has a shape of an approximately cuboid, and the PCB board 4 contains a camera 9 connected to the PCB board by a connector, LED lighting 10 connected to the PCB board permanently by soldering, a communication module 11 connected to the PCB board permanently by soldering, the magnetic pulse sensor 12 connected to the PCB board permanently by soldering, and the processor 13 connected to the PCB board permanently by soldering, and the gas sensor 14.
